# EUROPÄISCHE PATENTSCHRIFT

(11) **EP 3 095 738 B1**
(45) Veröffentlichungstag und Bekanntmachung des Hinweises auf die Patenterteilung: **26.09.2018**
(21) Anmeldenummer: 16170937.3
(22) Anmeldetag: 23.05.2016
(51) Int. Cl.: B65G 49/06, A47B 43/00, A47B 45/00

(54) **TRANSPORTGESTELL**
TRANSPORT STAND
CHEVALET DE TRANSPORT

(30) Priorität: 22.05.2015 AT 504192015
(43) Veröffentlichungstag der Anmeldung: 23.11.2016
(73) Patentinhaber: Priess, Heimo, 4073 Wilhering (AT); Hummer, Manfred, 4050 Traun (AT)
(72) Erfinder: Priess, Heimo, 4073 Wilhering (AT); Hummer, Manfred, 4050 Traun (AT)
(74) Vertreter: Jell, Friedrich

(56) Entgegenhaltungen:
- DE-U1-202006 009 746
- DE-U1-202006 009 746
- DE-U1-202013 010 481
- GB-A- 1 159 143
- US-A- 1 412 694
- US-A- 2 748 955
- US-A- 3 955 676
- US-A1- 2008 073 304

## Beschreibung

Die Erfindung betrifft ein Transportgestell zum Transport von Glasscheiben, Fenstern oder Türen mit mehreren Gestellelementen, die je einen, zumindest eine Auflage ausbildenden Trägerboden und je eine, zumindest eine Anlage ausbildende Trägerwand aufweisen, und mit mehreren zwischen den Gestellelementen vorgesehenen Holmen, die jeweils endseitig über Schwenklager an die Gestellelemente anschließen und damit die Gestellelemente in Längsrichtung des Transportgestells aufeinander zu und voneinander weg zum Auf- und Zusammenklappen des Transportgestells beweglich lagern.

Aus dem Stand der Technik ist ein Transportgestell für Glasscheiben bekannt (US3955676A), bei dem mehrere Gestellelemente über Holme aus teleskopartigen Querstreben verbunden sind. Die Gestellelemente weisen einen Trägerboden, der eine Auflage für die Glasscheiben ausbildet, und eine Trägerwand auf, die eine A-förmige Anlage für die Glasscheiben ausbildet. Durch die teleskopartigen Querstreben, die über Schwenklager mit den Gestellelementen verbunden sind, können die Gestellelemente aufeinander zu- und voneinander wegbewegt werden - was ein Auf- und Zusammenklappen des Transportgestells ermöglicht. Nachteilig weist solch ein aufgeklapptes Transportgestell jedoch eine vergleichsweise geringe Steifigkeit und Stabilität auf und muss nach seiner Beladung mit Glasscheiben zusätzlich mit versteifenden Elementen versehen werden, was zu einer erschwerten Handhabung führt.

Die Erfindung hat sich daher die Aufgabe gestellt, ein Transportgestell der eingangs geschilderten Art konstruktiv derart zu verändern, dass bei einfacher Handhabbarkeit dennoch eine hohe mechanische Belastbarkeit gewährleistet werden kann. Zudem soll ein zusammengeklapptes Transportgestell eine geringe Baugröße aufweisen.

Die Erfindung löst die gestellte Aufgabe dadurch, dass die Holme in Längsrichtung des Transportgestells verlaufen und beim Zusammenklappen des Transportgestells mit ihren anschließenden Schwenklagern zum Hochklappen eines der beiden an den Holmen schwenkbar angelenkten Gestellelemente zusammenwirken.

Verlaufen die Holme in Längsrichtung des Transportgestells, so kann auf konstruktiv einfache Weise ein in Längsrichtung mechanisch belastbarer Konstruktionsverbund zwischen den einzelnen Gestellelementen geschaffen werden - insbesondere die Standfestigkeit des Transportgestells kann damit deutlich erhöht werden. Zudem vereinfachen sich dadurch die Konstruktionsverhältnisse im Vergleich zu einem Querstrebenverbund erheblich. Wirken zudem die längsseitig verlaufenden Holme beim Zusammenklappen des Transportgestells mit ihren anschließenden Schwenklagern zum Hochklappen eines der beiden an den Holme schwenkbar angelenkten Gestellelemente zusammen, kann das Transportgestell - trotz einer mechanisch vergleichsweise steifen Konstruktion - im zusammengeklappten Zustand eine kompakte Baugröße aufweisen. Vorteilhaft können nämlich durch den Höhenversatz der Gestellelemente die zur beweglichen Lagerung der Gestellelemente vorgesehenen Bauelemente an die Gestellelemente angelegt werden. Zudem ist das Auf- und Zusammenklappen des Transportgestells durch den erfindungsgemäßen Klappmechanismus einfach - ohne Verwendung von Werkzeugen oder zusätzlichen Bauelementen zur Versteifung - durchführbar, was das Transportgestell vergleichsweise einfach handhabbar und damit bedienungsfreundlicher macht.

Die Stabilität und mechanische Steifigkeit des Transportgestells können weiter erhöht werden, indem Holme zwischen den Trägerböden der Gestellelemente und Holme zwischen den Trägerwänden der Gestellelemente verlaufen und an diese über Schwenklager anschließen. Dadurch können an der Auflage und auch an der Anlage der Gestellelemente deutlich höhere Lasten abgetragen werden - und zwar ohne eine Verwindung des Transportgestells befürchten zu müssen.

Bildet mindestens ein Holm in Längsrichtung des Transportgestells einen Oberholm zwischen aneinander anschließenden Gestellelementen aus, kann die mechanische Steifigkeit des Transportgestells im Bereich seiner Anlage weiter erhöht werden. Insbesondere kann dies die Gefahr eines Kippens des Transportgestells bei Stoßbelastungen reduzieren.

Die mechanische Belastbarkeit der Auflagen des Transportgestells kann zusätzlich erhöht werden, wenn zwischen den Trägerböden der Gestellelemente vorgesehene, längsseitige Holme mit den Trägerböden einen Grundrahmen am Transportgestell ausbilden. Durch diese konstruktive Maßnahme kann die Verwindungssteifigkeit des Transportgestells erhöht werden, was einen sicheren Transport der aufgenommenen Ware - selbst bei unebener Aufstellfläche - sicherstellen kann.

Weist das Transportgestell mindestens eine Querstrebe auf, die zwischen den Gestellelementen vorgesehen und mit diesen zur Sicherung des aufgeklappten Transportgestells lösbar verbunden ist, kann ist das Transportgestell im aufgeklappten Zustand einfach handhabbar fixierbar womit ein unbeabsichtigtes Zusammenklappen vermieden wird. Zudem wird das Transportgestell durch die Querstrebe zusätzlich versteift.

Die Länge des Transportgestells kann auf einfache Weise erweitert werden, indem das Transportgestell mindestens drei Gestellelemente aufweist, wobei das davon mittig angeordnete Gestellelement beim Zusammenklappen des Transportgestells gegenüber den beiden randseitigen Gestellelementen hochklappt. Dieses Zusammenklappen kann vorzugsweise durch ein Hochziehen des mittig angeordneten Gestellelements erreicht werden, wobei sich dabei die äußeren Gestellelemente aufeinander zu bewegen.

Die Höhe des zusammengeklappten Transportgestells kann gering werden, wenn die Höhe der Trägerwand des mittigen Gestellelements, insbesondere mindestens um die Länge der Holme in Längsrichtung, geringer als die Höhe der Trägerwände der beiden randseitigen Gestellelemente ist.

Weist das mittige Gestellelement eine Außenkranöse auf, so kann ein Angriffspunkt zum Heben des Transportgestells durch einen Kran geschaffen werden. Durch das Anbringen der Außenkranöse am mittigen Gestellelement kann zudem ein schwerpunktneutrales Heben gewährleistet - und damit ein Kippen des Gestells in Längsrichtung vermieden werden. Zudem lässt sich das Transportgestell durch die Außenkranöse an dem mittigen Gestellelement durch Hochheben mithilfe eines Krans auf einfache Weise zusammenklappen. Dadurch kann die Handhabbarkeit des Transportgestells weiter verbessert werden.

Ist zwischen dem mittigen Gestellelement und dessen beiden angrenzenden randseitigen Gestellelementen je eine lösbare Querstrebe vorgesehen, die auf gleicher Höhe am mittigen Gestellelement je über einen Arretierhebel lösbar gelagert sind, kann das Gestell im ausgeklappten Zustand schnell und zuverlässig gesichert werden - womit ein unbeabsichtigtes Zusammenklappen, insbesondere beim Anheben mit einem Kran, vermieden werden kann. Die Arretierhebel können hierbei insbesondere eine schnelle, keine Werkzeuge erfordernde Ver- und Entriegelung ermöglichen.

Um die mechanische Reibung zwischen Transportgestell und Ladung zu erhöhen, weisen die Trägerwand und der Trägerboden Gleitleisten auf, die Auflagen und Anlagen ausbilden. Dadurch kann zuverlässig vermieden werden, dass die transportierte Ware am Gestell verrutscht und dabei mechanischen Schaden erfährt. Die Handhabung des Transportgestells kann dadurch deutlich vereinfacht und verbessert werden.

Im Allgemeinen wird festgehalten, dass die Gleitleisten bevorzugt aus einem gummiartigen Material bestehen können, wodurch eine verbesserte, rutschfeste Auflage für die zu transportierende Ladung geschaffen werden kann.

Weist die Trägerwand einen am Trägerboden anschließenden Vertikalsteher und eine die Anlage ausbildende Anlageschulter auf und schließt diese an den Trägerboden an, so kann ein Transportgestell mit einer zur Vertikalen geneigten Anlage geschaffen werden, wodurch eine plattenförmige Ladung zuverlässig vor dem Umkippen geschützt werden kann.

Endet der Vertikalsteher in einem Standfuß des Transportgestells, so kann auf konstruktiv einfache Weise ein fester Stand des Gestells gewährleistet und eine ungünstige Gewichtsverlagerung vermieden werden. Zudem sind durch den einstückigen Vertikalsteher Standfestigkeit und Steifigkeit des Transportgestells weiter erhöhbar.

Weist die A-förmige Trägerwand zwei, die Anlagen ausbildende Anlageschultern auf und bildet der Trägerboden zwei Auflagen aus, kann ein stabiles und einfach zusammenklappbares Transportgestell geschaffen werden, welches auf zwei Seiten beladen werden kann. Dadurch kann insbesondere der Massenschwerpunkt des beladenen Transportgestells vorteilhaft zur Mitte des Gestells hin verschoben werden - was sich insbesondere bezüglich der Handhabung des Transportgestells als positiv erweist.

In den Figuren ist beispielsweise der Erfindungsgegenstand anhand einer Ausführungsvariante näher dargestellt. Es zeigen
- Fig. 1: eine schematische Ansicht auf eine Ausführungsart des erfindungsgemäßen Transportgestells,
- Fig. 2: eine schematische Detailansicht eines Gestellelements als Bestandteil des Transportgestells,
- Fig. 3: eine schematische Ansicht des in Fig. 1 dargestellten Transportgestells in zusammengeklapptem Zustand,
- Fig. 4: eine schematische Ansicht auf eine zweite Ausführungsart des erfindungsgemäßen Transportgestells,
- Fig. 5: eine schematische Ansicht des in Fig. 4 dargestellten Transportgestells in zusammengeklapptem Zustand.

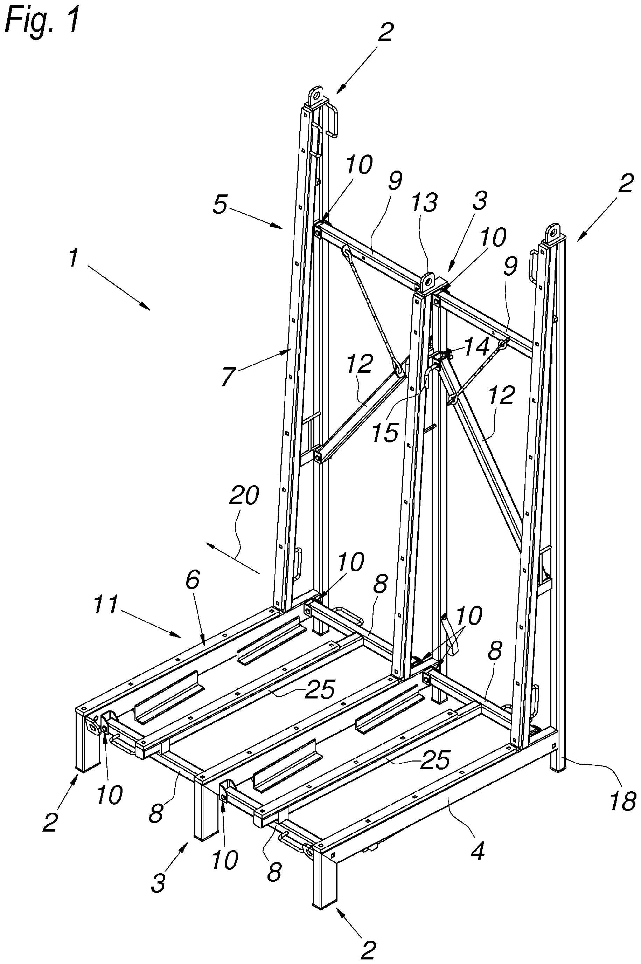

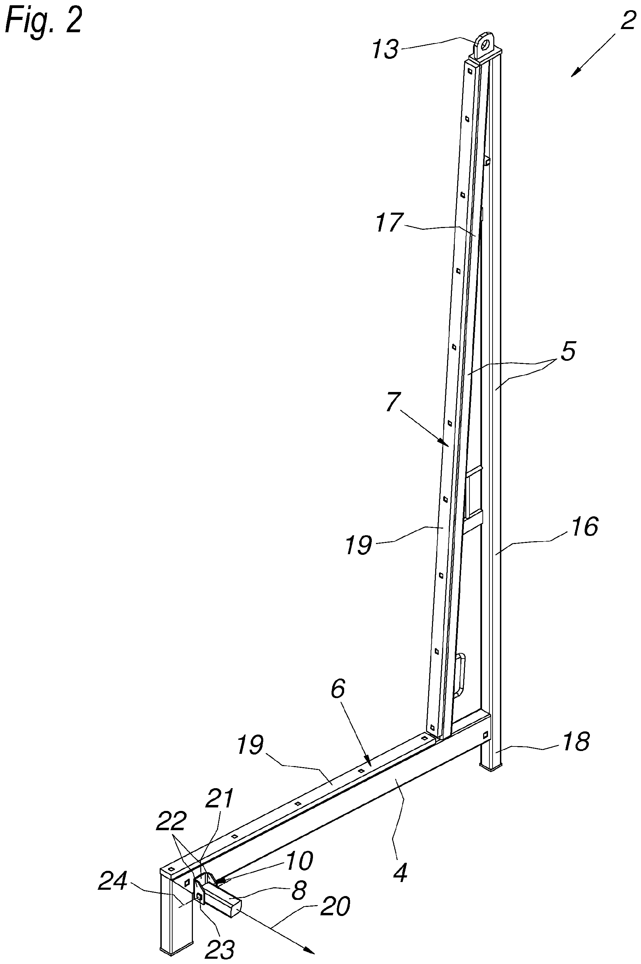

Gemäß Fig. 1 ist ein Transportgestell 1 gezeigt, das mehrere Gestellelemente 2, 3 aufweist. In Fig. 2 ist davon ein einzelnes Gestellelement 2 dargestellt, das sich im Wesentlichen aus einem Trägerboden 4 mit einer Auflage 6 und aus einer Trägerwand 5 mit einer Anlage 7 besteht. Wie in Fig. 1 ist weiter zu erkennen, sind zwischen diesen Gestellelementen 2, 3 mehrere Holme 8, 9 vorgesehen. Die Holme 8, 9 sind an ihren beiden Enden jeweils über Schwenklager 10 mit den Gestellelementen 2, 3 verbunden. Wie in Fig. 2 zu einem dieser Schwenklager 10 im Detail erkennbar, ist hierzu am Gestellelement 3 ein Lagerelement 21 befestigt, in dessen Seitenwänden 22 ein Lagerbolzen 23 radial und axial gelagert ist. Über den Lagerbolzen 23, der den Holm 8 durchragt, schließt dieser Holm 8 an das Schwenklager 10 an. Die Lagerachse 24 des Schwenklagers 10 verläuft normal zur Längsachse 20 des Transportgestells 1. Durch diese schwenkbare Anlenkung können die Gestellelemente 2, 3 in Längsrichtung 20 des Transportgestells aufeinander zu und voneinander wegbewegt werden. Damit kann das Transportgestell 1 auf- und zusammengeklappt werden. Erfindungsgemäß wird diese Funktionalität dadurch ermöglicht, dass die Holme 8, 9 in Längsrichtung des Transportgestells 1 verlaufen und beim Zusammenklappen des Transportgestells 1 mit den anschließenden Schwenklagern 10 zum Hochklappen eines der beiden an den Holmen 8, 9 schwenkbar angelenkten Gestellelemente 3 zusammenwirken. Damit ist ein schnell und einfach auf- und zusammenklappbares Transportgestell 1 geschaffen, das mithilfe von Gestellelementen 2, mit längsseitigen Holmen 8, 9 und Schwenklagern 10 eine hohe mechanische Festigkeit gewährleisten kann. Zudem ist mit dem Hochklappen des Gestellelements 3 ein kompakt zusammenklappbares Transportgestell 1 geschaffen.

Nach Fig. 1 kann weiter erkannt werden, dass die sowohl zwischen den Trägerböden 4 Holme 8 verlaufen, als auch Holme 9 zwischen den Trägerwänden 5 der Gestellelemente 2, 3 vorgesehen und jeweils über Schwenklager 10 mit ebendiesen verbunden sind - wobei zumindest ein in Längsrichtung des Transportgestells 1 verlaufender Holm einen Oberholm 9 ausbildet. Zudem sind zwischen den Trägerböden 4 in Längsrichtung 20 verlaufende Holme 8 über Schwenklager 10 angebracht und bilden mit den Trägerböden 4 einen Grundrahmen 11 aus. Durch das Zusammenwirken von Gestellelementen 2, 3, Oberholmen 9 und längsseitigen Holmen 8 wird ein äußerst stabiles und verwindungssteifes Transportgestell 1 geschaffen, welches hohe Lasten standfest aufnehmen kann. Der Grundrahmen 11 wird zudem mit zwischen den längsseitigen Holmen 8, parallel zu den Trägerböden 4 verlaufenden Querholmen 25 versteift, welche starr an den längsseitigen Holmen 8 befestigt sind.

Zwischen den Gestellelementen 2, 3 ist zumindest eine Querstrebe 12 angebracht, welche das ausgeklappte Transportgestell 1 zusätzlich sichert und versteift. Die Querstreben 12 sind jeweils auf einem Ende über ein Schwenklager 10 mit einem Gestellelement 2 und auf dem anderen Ende über ein lösbares Schwenklager 13 mit einem anderen Gestellelement 3 verbunden.

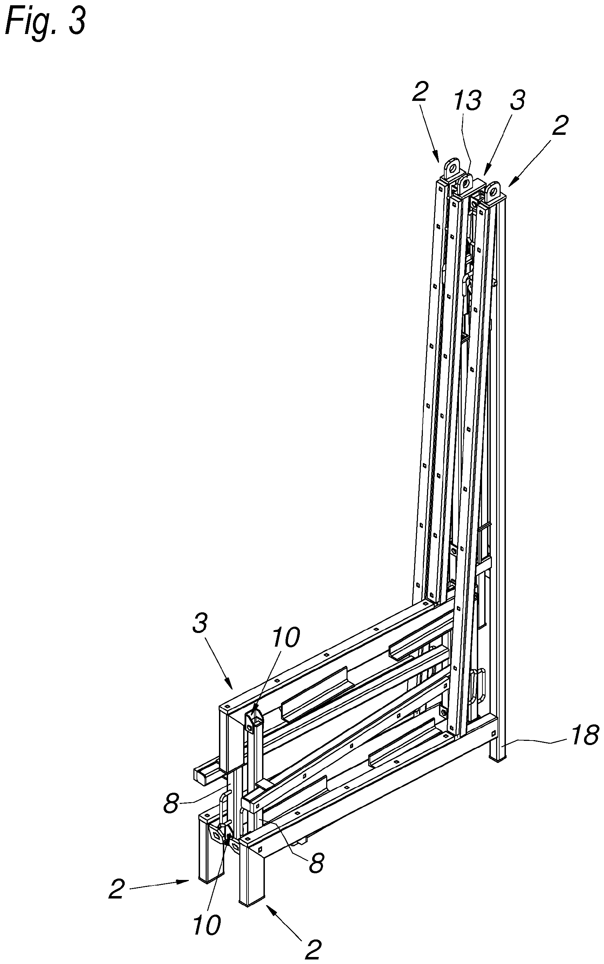

Gemäß Fig. 1 ist gezeigt, dass das Transportgestell 1 des vorliegenden Ausführungsbeispiels drei Gestellelemente 2, 3 aufweist, wobei das Transportgestell 1 zu beiden Seiten jeweils durch randseitige Gestellelemente 2 abschließt und ein mittig angeordnetes Gestellelement 3 aufweist. Es ist aber ebenso vorstellbar, mehr als drei Gestellelemente vorzusehen. Beim Zusammenklappen des Transportgestells 1 klappt das mittige Gestellelement 3 nach oben, und die randseitigen Gestellelemente 2 bewegen sich aufeinander zu, sodass im zusammengeklappten Zustand alle Gestellelemente 2, 3 aneinander anliegen und das mittige Gestellelement 3 gegenüber den randseitigen Gestellelementen 2 erhöht ist. Dies kann insbesondere aus der Fig. 3 entnommen werden. Die Trägerwand 5 des mittigen Gestellelements 3 ist dabei gegenüber den Trägerwänden 5 der randseitigen Gestellelemente 2 derart verkürzt, dass das mittige Gestellelement 3 im zusammengeklappten Zustand nicht über die randseitigen Gestellelemente 2 hinausragt. Insbesondere muss hierfür die Trägerwand 5 des mittigen Gestellelements 3 zumindest um die Länge eines Oberholms 9 verkürzt werden.

Das mittige Gestellelement 3 weist zudem an seiner Oberseite eine Außenkranöse 13 auf, welche als Angriffspunkt für eine Hebevorrichtung, wie etwa einem Kran dienen kann. Die Außenkranöse 13 kann insbesondere dazu dienen, das entriegelte Transportgestell 1 zusammenzuklappen, indem das mittige Gestellelement 3 an der Außenkranöse 13 senkrecht nach oben gezogen wird. Dadurch klappen die beiden seitlichen Gestellelemente 2 selbsttätig in Richtung des mittigen Gestellelements 3. Insbesondere ist jeweils zu beiden Seiten zwischen seitlichem Gestellelement 2 und mittigem Gestellelement 3 eine lösbare Querstrebe 12 angebracht. Dazu sind die beiden Querstreben 12 am mittigen Gestellelement 3 in gleicher Höhe über je ein lösbares Schwenklager 14 befestigt. Die Querstreben 12 werden über Arretierhebel 15 in den lösbaren Schwenklagern 14 gehalten und können nach dem Entfernen der Arretierhebel 15 aus den Schwenklagern 14 gelöst werden. Die Arretierhebel 15 dienen demnach dazu, das Transportgestell 1 im ausgeklappten Zustand zu arretieren, bzw. nach deren Entfernen ein Zusammenklappen des Transportgestells 1 zu ermöglichen.

Wie in Fig. 2 dargestellt, weist die Trägerwand 5 eines Gestellelements 2 einen Vertikalsteher 16 auf, welcher am unteren Ende des Gestellelements 2 an den Trägerboden 4 anschließt. Zudem weist die Trägerwand 5 eine Anlageschulter 17 auf, welche die Anlage 7 ausbildet. Die Anlageschulter 17 und der Vertikalsteher 16 schließen zum oberen Ende des Gestellelements 2 hin einen spitzen Winkel ein. Zudem schließt die Anlageschulter 17 an den Trägerboden 4 an. Der Vertikalsteher 16 endet zur Unterseite hin in einem Standfuß 18 des Transportgestells 1. Auf den Trägerböden 4 und den Trägerwänden 5 der Gestellelemente 2, 3 sind jeweils Gleitleisten 19 angebracht, welche jeweils die Auflagen 6 und Anlagen 7 ausbilden. Die Gleitleisten 19 erhöhen die mechanische Reibung zwischen Transportgestell und Ladung und tragen so zu deren Sicherung auf dem Transportgestell bei.

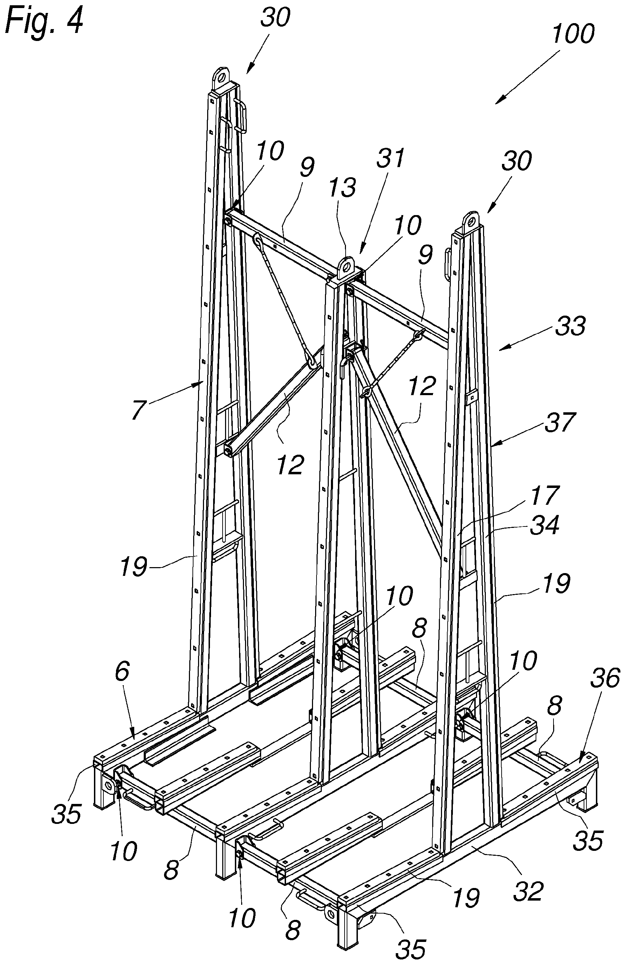

In Fig. 4 ist eine weitere Ausführungsart eines erfindungsgemäßen Transportgestells 100 gezeigt. Dieses weist im Besonderen drei A-förmige Gestellelemente 30, 31 auf, welche jeweils im Wesentlichen aus einem Trägerboden 32 und einer Trägerwand 33 bestehen. Die Trägerwand 33 weist dabei zwei einander spitz zulaufende Anlageschultern 17, 34 auf, welche jeweils wiederum eine Anlage 7, 37 ausbilden. Der Trägerboden 32 bildet auf beiden Seiten der Anlageschultern 17, 34 jeweils an die Anlagen 7, 37 anschließende Auflagen 6, 36 aus. Durch die A-förmige Ausgestaltung der Gestellelemente 30, 31 kann ein Transportgestell 100 geschaffen werden, welches zwei identische Beladungsseiten mit Auflagen 6, 36 und Anlagen 7, 37 aufweist. In Fig. 4 ist der Trägerboden 32 insbesondere als einstückiger Holm dargestellt. Dieser kann jedoch auch zweistückig ausgeführt sein, um die Auflagen 6, 36 gegenüber der Horizontalen geneigt auszuführen. Um gegen die Horizontale geneigte Auflagen 6, 36 - die so ein besonders sicheres Aufnehmen von Ladung ermöglichen - bei einem einstückigen Trägerboden 32 auszubilden, werden die, die Auflagen 6 aufweisenden Gleitleisten 19 auf U-Profilen 35 vorgesehen und am Trägerboden 32 geneigt befestigt. Dadurch kann der Neigungswinkel der Gleitleisten 19 unabhängig vom Trägerboden 32 beliebig eingestellt werden.

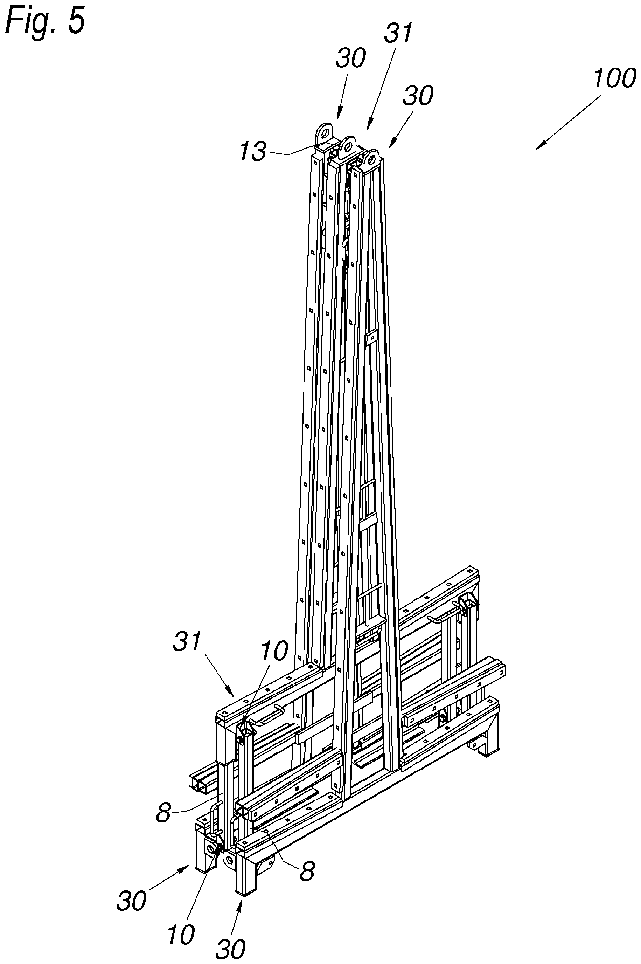

In Fig. 5 ist das A-förmige Transportgestell 100 in zusammengeklapptem Zustand gezeigt. Das mittige Gestellelement 31 ist gegenüber den randseitigen Gestellelementen 30 verkürzt, sodass dieses nach dem Hochklappen nicht über die randseitigen Gestellelemente 30 hinausragt. Ein äußerst kompaktes, zusammenklappbares Transportgestell 100 mit zwei Beladungsseiten kann auf diese Weise geschaffen werden.

Die zuvor, für das in Fig. 1 bis 3 gezeigte Transportgestell 1, beschriebenen konstruktiven Merkmale bzw. Bezugszeichen sind analog am A-förmigen Transportgestell 100 zu finden.

## Patentansprüche

1. Transportgestell zum Transport von Glasscheiben, Fenstern oder Türen mit mehreren Gestellelementen (2, 3, 30, 31), die je einen, zumindest eine Auflage (6, 36) ausbildenden Trägerboden (4, 32) und je eine, zumindest eine Anlage (7, 37) ausbildende Trägerwand (5, 33) aufweisen, und mit mehreren zwischen den Gestellelementen (2, 3, 30, 31) vorgesehenen Holmen (8, 9), die jeweils endseitig über Schwenklager (10) an die Gestellelemente (2, 3, 30, 31) anschließen und damit die Gestellelemente (2, 3, 30, 31) in Längsrichtung (20) des Transportgestells (1, 100) aufeinander zu und voneinander weg zum Auf- und Zusammenklappen des Transportgestells (1, 100) beweglich lagern, **dadurch gekennzeichnet, dass** die Holme (8, 9) in Längsrichtung (20) des Transportgestells (1, 100) verlaufen und beim Zusammenklappen des Transportgestells (1, 100) mit ihren anschließenden Schwenklagern (10) zum Hochklappen eines der beiden an den Holmen (8, 9) schwenkbar angelenkten Gestellelemente (2, 3, 30, 31) zusammenwirken.

2. Transportgestell nach Anspruch 1, **dadurch gekennzeichnet, dass** Holme (8) zwischen den Trägerböden (4, 32) der Gestellelemente (2, 3, 30, 31) und Holme (9) zwischen den Trägerwänden (5, 33) der Gestellelemente (2, 3, 30, 31) verlaufen und an diese über Schwenklager (10) anschließen.

3. Transportgestell nach Anspruch 1 oder 2, **dadurch gekennzeichnet, dass** mindestens ein Holm (8, 9) in Längsrichtung (20) des Transportgestells (1, 100) einen Oberholm (9) zwischen aneinander anschließenden Gestellelementen (2, 3, 30, 31) ausbildet.

4. Transportgestell nach Anspruch 1, 2 oder 3, **dadurch gekennzeichnet, dass** mehrere zwischen den Trägerböden (4, 32) der Gestellelemente (2, 3, 30, 31) vorgesehene, längsseitige Holme (8) mit den Trägerböden (4, 32) einen Grundrahmen (11) am Transportgestell (1, 100) ausbilden.

5. Transportgestell nach einem der Ansprüche 1 bis 4, **dadurch gekennzeichnet, dass** das Transportgestell (1, 100) mindestens eine Querstrebe (12) aufweist, die zwischen den Gestellelementen (2, 3, 30, 31) vorgesehen und mit diesen zur Sicherung des aufklappen Transportgestells (1, 100) lösbar verbunden ist.

6. Transportgestell nach einem der Ansprüche 1 bis 5, **dadurch gekennzeichnet, dass** das Transportgestell (1, 100) mindestens drei Gestellelemente (2, 3, 30, 31) aufweist, wobei das davon mittige Gestellelement (3, 31) beim Zusammenklappen des Transportgestells gegenüber den beiden randseitigen Gestellelementen (2, 30) hochklappt.

7. Transportgestell nach Anspruch 6, **dadurch gekennzeichnet, dass** die Höhe der Trägerwand (5, 33) des mittigen Gestellelements (3, 31), insbesondere mindestens um die Länge der Holme (8, 9) in Längsrichtung, geringer als die Höhe der Trägerwände (5, 33) der beiden randseitigen Gestellelemente (2, 30) ist.

8. Transportgestell nach Anspruch 6 oder 7, **dadurch gekennzeichnet, dass** das mittige Gestellelement (3, 31) eine Außenkranöse (13) aufweist.

9. Transportgestell nach Anspruch 6, 7 oder 8, **dadurch gekennzeichnet, dass** zwischen dem mittigen Gestellelement (3, 31) und dessen beiden angrenzenden randseitigen Gestellelementen (2, 30) je eine Querstrebe (12) vorgesehen ist, die auf gleicher Höhe am mittigen Gestellelement (3, 31) je über einen Arretierhebel (15) lösbar gelagert sind.

10. Transportgestell nach einem der Ansprüche 1 bis 9, **dadurch gekennzeichnet, dass** die Trägerwand (5, 33) und der Trägerboden (4, 32) Gleitleisten (19) aufweisen, die Auflagen (6, 36) und Anlagen (7, 37) ausbilden.

11. Transportgestell nach einem der Ansprüche 1 bis 10, **dadurch gekennzeichnet, dass** die Trägerwand (5) einen am Trägerboden (4) anschließenden Vertikalsteher (16) und eine die Anlage (7) ausbildende Anlageschulter (17) aufweist und an den Trägerboden (4) anschließt.

12. Transportgestell nach Anspruch 11, **dadurch gekennzeichnet, dass** der Vertikalsteher (16) in einem Standfuß (18) des Transportgestells (1) endet.

13. Transportgestell nach einem der Ansprüche 1 bis 10, **dadurch gekennzeichnet, dass** die A-förmige Trägerwand (33) zwei, die Anlagen (7, 37) ausbildende Anlageschultern (17, 34) aufweist und der Trägerboden (32) zwei Auflagen (6, 36) ausbildet.

## Claims

1. Transport frame for transporting glass panes, windows or doors with several frame elements (2, 3, 30, 31), each of which exhibit at least one supporting floor (4, 32) forming a base (6, 36) and at least one supporting wall (5, 33) forming a rest (7, 37), and with several rails (8, 9) provided between the frame elements (2, 3, 30, 31), respectively connected on the end side by swivel bearings (10) to the frame elements (2, 3, 30, 31) and so that the frame elements (2, 3, 30, 31) are supported so they can be moved towards and away from each other in the longitudinal direction (20) of the transport frame (1, 100) for unfolding and folding together the transport frame (1, 100), **characterised in that** the rails (8, 9) run in the longitudinal direction (20) of the transport frame (1, 100) and when the transport frame (1, 100) is folded together, interact with their connecting swivel bearings (10) to upfold one of the two frame elements (2, 3, 30, 31) linked to both rails (8, 9) so that it can swivel.

2. Transport frame according to claim 1, **characterised in that** the rails (8) run between the supporting floors (4, 32) of the frame elements (2, 3, 30, 31) and rails (9) run between the supporting walls (5, 33) of the frame elements (2, 3, 30, 31) and connect to these via swivel bearings (10).

3. Transport frame according to claim 1 or 2, **characterised in that** at least one rail (8, 9) forms an upper rail (9) between interconnecting frame elements (2, 3, 30, 31) in the longitudinal direction (20) of the transport frame (1, 100).

4. Transport frame according to claim 1, 2 or 3, **characterised in that** several longitudinal rails (8) provided between the supporting floors (4, 32) of the frame elements (2, 3, 30, 31) form a base frame (11) on the transport frame (1, 100) with the supporting floors (4, 32).

5. Transport frame according to any one of claims 1 to 4, **characterised in that** the transport frame (1, 100) exhibits at least one cross member (12), provided between the frame elements (2, 3, 30, 31) and connected removably to this to secure the unfolded transport frame (1, 100).

6. Transport frame according to any one of claims 1 to 5, **characterised in that** the transport frame (1, 100) exhibits at least three frame elements (2, 3, 30, 31), wherein the centre frame element (3, 31) of which upfolds against the two edge frame elements (2, 30) when upfolding together the transport frame.

7. Transport frame according to claim 6, **characterised in that** the height of the supporting wall (5, 33) of the centre frame element (3, 31), more particularly at least by the length of the rails (8, 9) in a longitudinal direction, is less than the height of the supporting walls (5, 33) of both edge frame elements (2, 30).

8. Transport frame according to any one of claims 6 or 7, **characterised in that** the centre frame element (3, 31) exhibits an outer lifting eye (13).

9. Transport frame according to any one of claims 6, 7, or 8, **characterised in that** a cross member (12) is provided between the centre frame element (3, 31) and its two adjacent edge frame elements (2, 30), which cross member (12) is supported removably at the same height on the centre frame element (3, 31) each by a locking lever (15).

10. Transport frame according to any one of claims 1 to 9, **characterised in that** the supporting wall (5, 33) and the supporting floor (4, 32) exhibit sliding strips (19) that form bases (6, 36) and rests (7, 37).

11. Transport frame according to any one of claims 1 to 10, **characterised in that** the supporting wall (5) exhibits a vertical upright (16) connecting to the supporting floor (4) and a rest shoulder (17) forming the attachment (7) and connects to the supporting floor (4).

12. Transport frame according to claim 11, **characterised in that** the vertical upright (16) ends in a foot (18) of the transport frame (1).

13. Transport frame according to any one of claims 1 to 10, **characterised in that** the A-shaped supporting wall (33) exhibits two rest shoulders (17, 34) forming the rests (7, 37) and the supporting floor (32) forms two bases (6, 36).

## Revendications

1. Chevalet de transport pour le transport de vitrages, fenêtres ou portes avec plusieurs éléments de chevalet (2, 3, 30, 31), chacun comportant une base de support (4, 32) formant au moins un support (6, 36) et une paroi de support (5, 33) formant au moins un appui (7, 37), et avec plusieurs montants (8, 9) prévus entre les éléments de chevalet (2, 3, 30, 31), qui se raccordent chacun à son extrémité au moyen de paliers pivotants (10) aux éléments de chevalet (2, 3, 30, 31), de sorte que les éléments de chevalet (2, 3, 30, 31) sont montés de façon mobile dans la direction de la longueur (20) du chevalet de transport (1, 100) et se rapprochent et s'écartent pour déplier et replier le chevalet de transport (1, 100), **caractérisé en ce que** les montants (8, 9) sont orientés dans la direction de la longueur (20) du chevalet de transport (1, 100) et viennent interagir avec leur palier pivotant raccordé (10) quand on replie le chevalet de transport (1, 100), pour plier vers le haut un des deux éléments de chevalet (2, 3, 30, 31) raccordés de manière pivotante aux montants (8, 9).

2. Chevalet de transport selon la revendication 1, **caractérisé en ce que** des montants (8) s'étendent entre les bases de support (4, 32) des éléments de chevalet (2, 3, 30, 31) et des montants (9) s'étendent entre les parois de support (5, 33) des éléments de chevalet (2, 3, 30, 31) et se raccordent à ceux-ci par un palier pivotant (10).

3. Chevalet de transport selon la revendication 1 ou 2, **caractérisé en ce que** au moins un montant (8, 9) forme un montant supérieur (9) en direction de la longueur (20) du chevalet de transport (1, 100) entre les éléments de chevalet (2, 3, 30, 31) successifs.

4. Chevalet de transport selon la revendication 1, 2 ou 3, **caractérisé en ce que** plusieurs montants longitudinaux (8) prévus entre les bases de support (4, 32) des éléments de chevalet (2, 3, 30, 31) forment avec les bases de support (4, 32) un cadre de base (11) sur le chevalet de transport (1, 100).

5. Chevalet de transport selon une des revendications 1 à 4, **caractérisé en ce que** le chevalet de transport (1, 100) comporte au moins une traverse (12), prévue entre les éléments de chevalet (2, 3, 30, 31) et reliée à ceux-ci de façon amovible pour sécuriser avec eux le chevalet de transport (1, 100) en position dépliée.

6. Chevalet de transport selon une des revendications 1 à 5, **caractérisé en ce que** le chevalet de transport (1, 100) comporte au moins trois éléments de chevalet (2, 3, 30, 31), l'élément de chevalet central (3, 31) étant replié vers le haut par rapport aux deux éléments de chevalet des bords (2, 30) lorsqu'on replie le chevalet de transport.

7. Chevalet de transport selon la revendication 6, **caractérisé en ce que** la hauteur de la paroi de support (5, 33) de l'élément de chevalet central (3, 31) est inférieure à la hauteur des parois de support (5, 33) des deux éléments de chevalet (2, 30) des bords, notamment d'au moins la longueur des montants (8, 9) en direction longitudinale.

8. Chevalet de transport selon la revendication 6 ou 7, **caractérisé en ce que** l'élément de chevalet central (3, 31) comporte un oeillet de grue extérieur (13).

9. Chevalet de transport selon la revendication 6, 7 ou 8, **caractérisé en ce que** entre l'élément de chevalet central (3, 31) et chacun des deux éléments de chevalet des bords (2, 30) qui lui sont contigus, sont prévues des traverses (12), qui sont montées chacune de manière amovible à la même hauteur sur l'élément de chevalet central (3, 31) au moyen d'un levier de blocage (15).

10. Chevalet de transport selon une des revendications 1 à 9, **caractérisé en ce que** la paroi de support (5, 33) et la base de support (4, 32) comportent des glissières (19) qui forment les supports (6, 36) et les appuis (7, 37).

11. Chevalet de transport selon une des revendications 1 à 10, **caractérisé en ce que** la paroi de support (5) comporte un montant vertical (16) qui rejoint la base de support (4) et un épaulement de butée (17) qui forme l'appui (7) et rejoint la base de support (4).

12. Chevalet de transport selon la revendication 11, **caractérisé en ce que** le montant vertical (16) se termine par un pied (18) du chevalet de transport (1).

13. Chevalet de transport selon une des revendications 1 à 10, **caractérisé en ce que** la paroi de support en forme de À (33) comporte deux épaulements de butée (17, 34) qui forment les appuis (7, 37) et la base de support (32) forme deux supports (6, 36).
